# EUROPEAN PATENT APPLICATION

(11) **EP 4 592 954 A1**
(43) Date of publication of application: **30.07.2025**
(21) Application number: 23868308.0
(22) Date of filing: 22.05.2023
(51) Int. Cl.: G06T 7/50, G06T 7/11

(54) **APPARATUS AND METHOD FOR IMAGE ANALYSIS**

(30) Priority: 20.09.2022 KR 20220118655; 15.05.2023 KR 20230062399
(71) Applicant: Hanwha Vision Co., Ltd., Seongnam-si, Gyeonggi-do 13488 (KR)
(72) Inventor: PARK, Dong Jin, Seongnam-si Gyeonggi-do 13488 (KR); KIM, Dae Bong, Seongnam-si Gyeonggi-do 13488 (KR)
(74) Representative: Glawe, Delfs, Moll
(86) International application number: PCT/KR2023/006885
(87) International publication number: WO 2024/063242

(57) **Abstract**

The present disclosure relates to an apparatus and method for image analysis, and more particularly to, an apparatus and method for image analysis for calculating an absolute distance for an entire depth map (300) by calculating an absolute distance of a standard map object (310) among map objects included in the depth map (300) and applying the absolute distance to the remaining portion of the depth map (300). The apparatus for image analysis includes: an imaging unit (110) generating a captured image (200); an object detection unit (140) detecting an object from the captured image (200); a depth map generation unit generating a depth map (300) for the captured image (200); and a map analysis unit (160) calculating an absolute distance for an entire area of the depth map (300) by selecting a standard object among the detected objects and referring to an absolute distance calculated for a standard map object (310) corresponding to the standard object among map objects included in the depth map (300).

## Description

### [Technical Field]

The present disclosure relates to an apparatus and method for image analysis, and, more particularly, to an apparatus and method for image analysis for calculating an absolute distance for an entire depth map by calculating an absolute distance of a standard map object among map objects included in the depth map and applying the absolute distance to the remaining portion of the depth map.

### [Background Art]

A depth map represents information that includes a distance between an observation point and an object. Since the depth map includes distance information between the observation point and each surface of the object, it is possible to calculate a three-dimensional image of the object using the depth map.

On the other hand, since the depth map includes only relative distance information between the observation point and the object, an absolute distance of the object included in the depth map may not be calculated through the depth map.

Therefore, there is a need for an invention that allows calculating the absolute distance of the object included in the depth map.

### [Disclosure]

### [Technical Problem]

Aspects of the present disclosure provide an apparatus and a method for image analysis configured to calculate an absolute distance for an entire depth map by calculating an absolute distance of a standard map object among map objects included in the depth map and applying the absolute distance to the remaining portion of the depth map.

Aspects of the present disclosure are not limited to the above-mentioned aspects. That is, other aspects that are not mentioned may be obviously understood by those skilled in the art from the following specification.

### [Technical Solution]

According to an aspect of the present disclosure, there is provided an apparatus for image analysis, including: an imaging unit configured to generate a captured image; an object detection unit configured to detect an object from the captured image; a depth map generation unit configured to generate a depth map for the captured image; and a map analysis unit configured to calculate an absolute distance for an entire area of the depth map by selecting a standard object among the detected objects and by referring to an absolute distance calculated for a standard map object corresponding to the standard object among map objects included in the depth map.

The depth map includes relative distance information of objects included in the captured image.

The object detection unit is configured to detect a reference object among the objects included in the captured image, wherein the reference object is an object for which standard size information has been secured, and the map analysis unit is configured to select the standard object among the reference objects.

The map analysis unit includes: a distance calculation unit configured to calculate an absolute distance of the standard map object by referring to the size of the standard map object; and a distance conversion unit configured to convert a relative distance for the entire area of the depth map into an absolute distance according to a ratio of the relative distance and the absolute distance of at least two standard map objects.

The distance calculation unit is configured to calculate the absolute distance of the standard map object by referring to the size of a standard area included in a preset portion of the standard map object.

The distance calculation unit is configured to calculate a relative distance of the standard map object by extracting some of the relative distance information included in the standard area.

The distance calculation unit is configured to: generate a feature area of a preset size in the standard area and to determine an average or median value of relative distances included in the feature area as the relative distance of the standard map object.

The map analysis unit is configured to: detect a standard object from a captured image for a pre-set area of interest of a capturable area of the imaging unit, and to update an absolute distance generated in advance for the depth map of the captured image based on the detected standard object.

The capturable area includes a plurality of areas of interest, and the map analysis unit detects a standard object from a captured image for an area of interest that has been switched in a preset order among the plurality of areas of interest.

The object detection unit is configured to detect an object in real time from the captured image, and the map analysis unit is configured to calculate the absolute distance for the entire area of the depth map when the object is detected from the captured image according to the real-time detection result.

According to another aspect of the present disclosure, there is provided a method for image analysis, including: generating a captured image; detecting an object from the captured image; generating a depth map for the captured image; selecting a standard object among the detected objects; and calculating an absolute distance for an entire area of the depth map by referring to an absolute distance calculated for a standard map object corresponding to the standard object among map objects included in the depth map.

The depth map includes relative distance information of objects included in the captured image.

The detecting of the object includes detecting a reference object among the objects included in the captured image, wherein the reference object is an object for which standard size information has been secured, and the selecting of the standard object includes selecting the standard object among the reference objects.

The calculating of the absolute distance for the entire area of the depth map includes: calculating an absolute distance of the standard map object by referring to the size of the standard map object; and converting a relative distance for the entire area of the depth map into an absolute distance according to a ratio of the relative distance and the absolute distance of at least two standard map objects.

The calculating of the absolute distance of the standard map object includes calculating the absolute distance of the standard map object by referring to the size of a standard area included in a preset portion of the standard map object.

The method further includes calculating a relative distance of the standard map object by extracting some of the relative distance information included in the standard area.

The calculating of the relative distance of the standard map object includes: generating a feature area of a preset size in the standard area; and determining an average or median value of relative distances included in the feature area as the relative distance of the standard map object.

The method further includes: detecting a standard object from a captured image for a pre-set area of interest of a capturable area of the imaging unit that generates the captured image; and updating an absolute distance generated in advance for the depth map of the captured image based on the detected standard object.

The captured image includes a plurality of areas of interest, and the detecting of the standard object from the area of interest includes detecting a standard object from a captured image for an area of interest that has been switched in a preset order among the plurality of areas of interest.

The detecting of the object from the captured image includes detecting an object in real time from the captured image, and the calculating of the absolute distance for the entire area of the depth map includes calculating the absolute distance for the entire area of the depth map when the object is detected from the captured image according to the real-time detection result.

The details of other embodiments are included in the detailed description and drawings.

### [Advantageous Effects]

The apparatus and method for image analysis according to the present disclosure as described above may calculate the absolute distance for the entire depth map by calculating the absolute distance of the standard map object, which has a correlation between the size and the absolute distance among the map objects included in the depth map and applying the absolute distance to the remaining portion of the depth map.

Further, since the present disclosure is implemented solely in software without separate hardware operation, the process of calculating the absolute distance for the entire depth map may be relatively quickly performed.

The effects of the present disclosure are not limited to the effects mentioned above, and other effects not mentioned will be clearly understood by those skilled in the art from the description of the claims.

### [Description of Drawings]

FIG. 1 is a block diagram of an apparatus for image analysis according to an embodiment of the present disclosure;
FIG. 2 is a block diagram of a map analysis unit;
FIG. 3 is a diagram illustrating a captured image;
FIG. 4 is a diagram illustrating a reference object being detected from the captured image;
FIG. 5 is a diagram illustrating a depth map of the captured image;
FIG. 6 is a diagram illustrating a standard box formed in a portion of a reference map object;
FIG. 7 is a diagram illustrating a standard area formed in the standard box;
FIG. 8 is a diagram illustrating a standard box formed in an entirety of the standard map object;
FIG. 9 is a diagram illustrating standard points displayed on a distance coordinate plane;
FIG. 10 is a diagram illustrating that a standard graph is formed based on the standard points;
FIG. 11 is a diagram illustrating that a standard graph is formed based on three standard points;
FIG. 12 is a flowchart illustrating a method for image analysis according to an embodiment of the present disclosure; and
FIG. 13 is a diagram illustrating that a region of interest is switched.

### [Mode for Invention]

Hereinafter, embodiments of the present disclosure will be described in detail with reference to the accompanying drawings. Advantages and features of the present disclosure, and a method for achieving the advantages and features will become apparent with reference to the embodiments described below in detail in conjunction with the accompanying drawings. However, the present disclosure is not limited to the embodiments disclosed below but may be implemented in a variety of different forms. These embodiments will be provided only in order to make the present disclosure complete and allow those skilled in the art to completely recognize the scope of the present disclosure, and the present disclosure is only defined by the scope of the claims. The same reference numbers indicate the same components throughout the specification.

Unless defined otherwise, all terms (including technical and scientific terms) used in the present specification have the same meaning as meanings commonly understood by those skilled in the art to which the present disclosure pertains. In addition, terms defined in generally used dictionaries are not ideally or excessively interpreted unless specifically defined clearly.

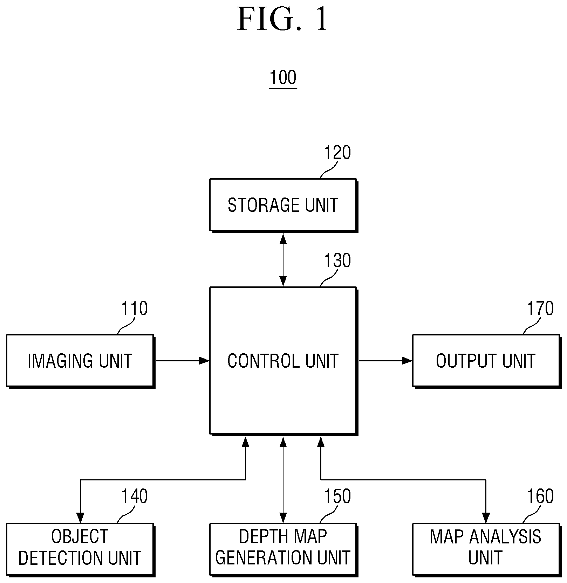

FIG. 1 is a block diagram of an apparatus for image analysis according to an embodiment of the present disclosure.

Referring to FIG. 1, an apparatus 100 for analyzing an image according to an embodiment of the present disclosure is configured to include an imaging unit 110, a storage unit 120, a control unit 130, an object detection unit 140, a depth map generation unit 150, a map analysis unit 160, and an output unit 170.

The imaging unit 110 may generate a captured image. For example, the imaging unit 110 may be a camera equipped with an image sensor such as a complementary metal-oxide-semiconductor (CMOS) or a charge-coupled device (CCD).

In the present disclosure, the imaging unit 110 may be a monocular camera. The captured image generated by the imaging unit 110 represents an image captured at one capturing point.

In addition, the imaging unit 110 may be equipped with a lens unit (not illustrated) capable of auto focus. As described below, the imaging unit 110 may perform auto focus under the control of the map analysis unit 150.

In addition, the imaging unit 110 may be capable of adjusting a capturing direction. For example, the imaging unit 110 may include a pan tilt equipment (not illustrated). The pan tilt equipment may adjust the capturing direction of the imaging unit 110 by an input control signal.

The storage unit 120 may temporarily or permanently store the captured image generated by the imaging unit 110. In addition, the storage unit 120 may store a depth map generated by the depth map generation unit 150 and may also store an analysis result generated by the map analysis unit 160.

In addition, the storage unit 120 may include a table (hereinafter, referred to as an absolute distance table) (not illustrated) that includes a correlation between the size and absolute distance of an object. In general, people, bicycles, and vehicles may be formed in a certain size. In this way, when an object whose size is generally uniform is included in the captured image, an absolute distance of a depth map object for the object may be determined using the size of the object. The storage unit 120 may store an absolute distance table including the relationship between the size and the absolute distance of the object, which may be used by a distance calculation unit described below.

The object detection unit 140 detects an object from the captured image. To this end, the object detection unit 140 may use an object detection model. For example, the object detection unit 140 may detect an object from the captured image using the YOLO (You Only Live Once) algorithm as the object detection model. The YOLO algorithm, which is relatively fast at detecting objects from the captured image, is an artificial intelligence algorithm suitable for surveillance cameras that process a real-time moving image. The result output from the YOLO algorithm may include a bounding box indicating a position of each object and a classification probability indicating what that object is.

The depth map generation unit 150 serves to generate a depth map for the captured image generated by the imaging unit 110. For example, the depth map generation unit 150 may generate the depth map of the captured image generated by the imaging unit 110, which is the monocular camera, using a deep learning-based model.

The depth map may include relative distance information of an object included in the captured image. The depth map may include the relative distance information between the objects included in the image, as well as relative distance information across surfaces that constitute each of the objects. For example, the depth map may be understood as including relative distance information for all pixels included in the captured image. By using the relative distance information of the objects, it is possible to estimate not only the arrangement relationship between the objects but also a three-dimensional shape of each object.

Alternatively, according to some embodiments of the present disclosure, the depth map generation unit 140 may generate a depth map using an artificial intelligence model and then convert the depth map by reflecting characteristics of a focus lens (not illustrated) included in the imaging unit 110. More specifically, an absolute distance between the object captured by the imaging unit 110 and the imaging unit 110 is calculated by referring to a position of the focus lens. In this case, the depth map generation unit 140 may convert the depth map so that the amount of change between the position of the focus lens and the absolute distance is reflected.

In addition, the depth map generation unit 140 may generate a depth map using at least one artificial intelligence model selected from among a plurality of different artificial intelligence models. The plurality of artificial intelligence models may generate optimal depth maps in different situations. For example, a first artificial intelligence model may generate an optimal depth map for an image including a daytime scene, and a second artificial intelligence model may generate an optimal depth map for an image including a nighttime scene. Alternatively, a third artificial intelligence model may generate an optimal depth map for an image including people or animals, and a third artificial intelligence model may generate an optimal depth map for an image including natural environments. The depth map generation unit 140 may select at least one of the plurality of artificial intelligence models by referring to capturing conditions by the imaging unit 110 and generate a depth map using the selected artificial intelligence model.

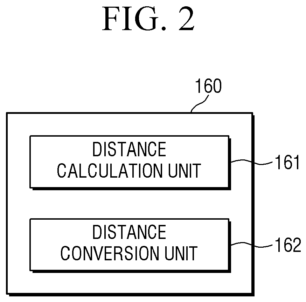

The map analysis unit 160 serves to analyze the depth map and calculate an absolute distance for an entire area of the depth map. Specifically, the map analysis unit 160 may calculate the absolute distance for the entire area of the depth map by selecting a standard object among the objects detected by the object detection unit 140 and referring to an absolute distance calculated for a standard map object corresponding to the standard object among the map objects included in the depth map. The detailed configuration and function of the map analysis unit 160 will be described later with reference to FIGS. 2 to 8.

The output unit 170 may output an analysis result of the map analysis unit 160. A user may check the absolute distance for the entire area of the captured image by referring to the analysis result of the map analysis unit 160. In this case, based on the captured image generated without performing direction switching and enlargement by the imaging unit 110, the object detection unit 140 may detect the object, and the depth map generation unit 150 may generate the depth map. As a result, according to the present disclosure, it is possible to output the analysis results by the map analysis unit 160 without switching the captured image being displayed.

The control unit 130 performs overall control of the imaging unit 110, the storage unit 120, the object detection unit 140, the depth map generation unit 150, the map analysis unit 160, and the output unit 170. For example, when a user command for calculating the absolute distance is input, the control unit 130 may control the imaging unit 110, the object detection unit 140, the depth map generation unit 150, and the map analysis unit 160 to enable generation of the absolute distance of the depth map for the captured image.

Meanwhile, according to some embodiments of the present disclosure, the control unit 130 may also enable generation of the absolute distance of the depth map for the captured image without inputting the user command. In this case, the object detection unit 140 may detect an object in real time from the captured image. As a result, when the object is detected from the captured image based on the real-time detection result of the object detection unit 140, the map analysis unit 160 may calculate the absolute distance for the entire area of the depth map. When a new absolute distance is calculated, the map analysis unit 160 may update the previously generated absolute distance with the new absolute distance, and such a process may be repeatedly performed.

FIG. 2 is a block diagram of a map analysis unit.

Referring to FIG. 2, the map analysis unit 160 is configured to include a distance calculation unit 161 and a distance conversion unit 162.

The distance calculation unit 161 serves to calculate the absolute distance of the reference map object by referring to the size of the standard map object. As described above, the absolute distance table may be stored in the storage unit 120. The distance calculation unit 161 may calculate the absolute distance of the standard map object by referring to the absolute distance table. The distance calculation unit 161 may calculate the absolute distance of the standard map object by extracting the absolute distance corresponding to the size of the standard map object from the absolute distance table.

In the present disclosure, the standard object represents an object used to convert a relative distance for the entire area of the depth map into an absolute distance. The standard object may be randomly selected among the objects included in the captured image.

The distance conversion unit 162 serves to convert the relative distance for the entire area of the depth map into the absolute distance according to the ratio of the relative distance and the absolute distance of at least two standard map objects. When the relative and absolute distances for two or more standard map objects are confirmed, the ratio between the relative and absolute distances for the entire depth map may be calculated based on the confirmation. The distance conversion unit 162 may calculate the absolute distance of each area by applying the relative distance of the entire area constituting the depth map to the ratio between the relative distance and the absolute distance.

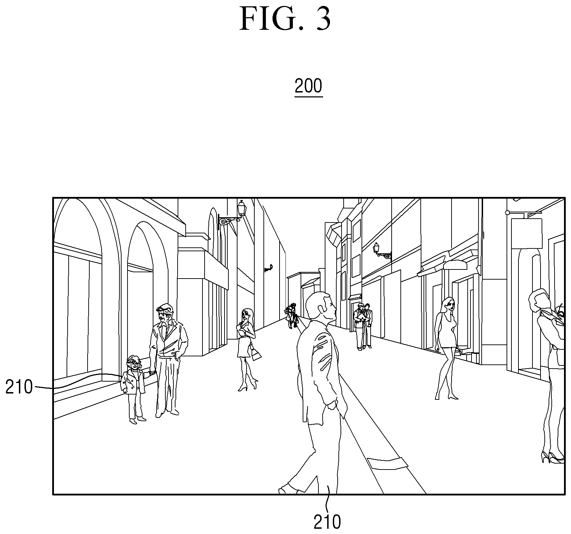

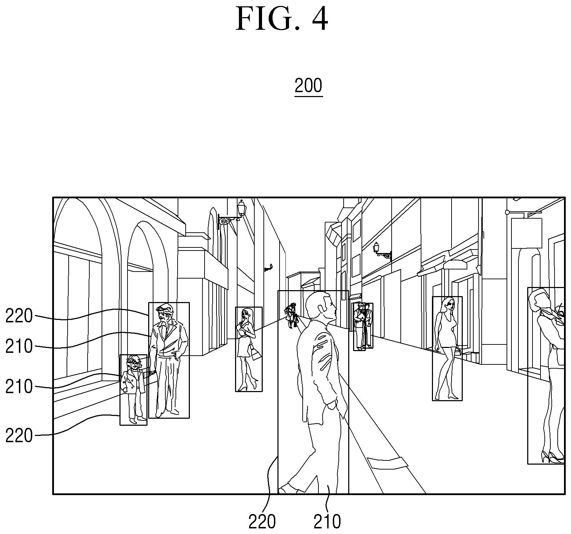

FIG. 3 is a diagram illustrating a captured image and FIG. 4 is a diagram illustrating a reference object being detected from the captured image.

Referring to FIG. 3, the imaging unit 110 may capture the front and generate a captured image 200.

The captured image 200 may include at least one object 210. The object 210 may include people, animals, vehicles, or buildings. The captured image 200, which is generated by the imaging unit 110, may be a still image or one of a plurality of scenes included in a moving image.

Referring to FIG. 4, the object detection unit 140 may detect the object 210 included in the captured image 200.

In particular, the object detection unit 140 of the apparatus 100 for image analysis according to the embodiment of the present disclosure may detect a reference object. In the present disclosure, the reference object refers to an object 210 included in the captured image 200 for which standard size information has been secured. The people, bicycles, and vehicles may be formed in a certain size. In this way, an object whose size is generally uniformly formed may be the reference object, and the object detection unit 140 may detect such a reference object from the captured image 200. When the reference object is detected, a bounding box 220 may be formed around an edge of the reference object. The map analysis unit 160 described above may select a standard object among the reference objects.

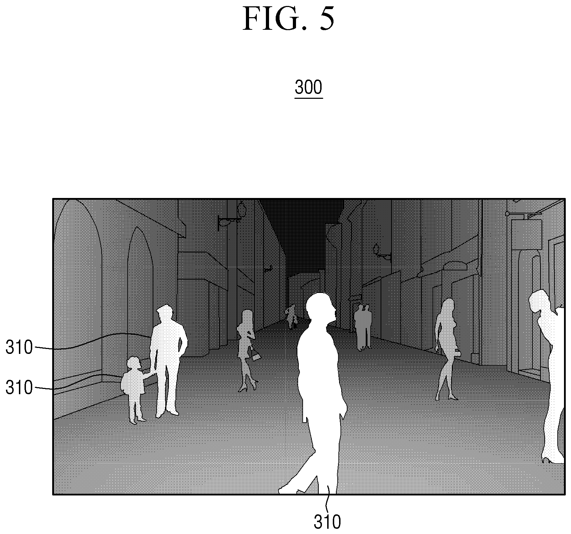

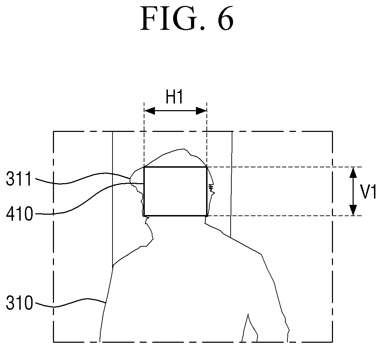

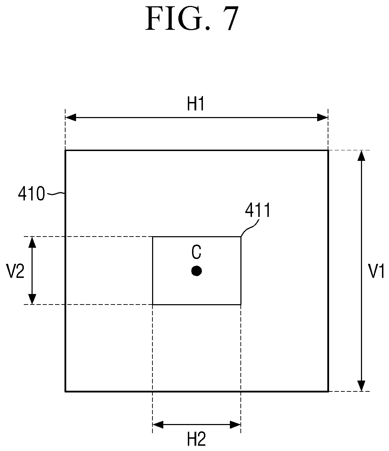

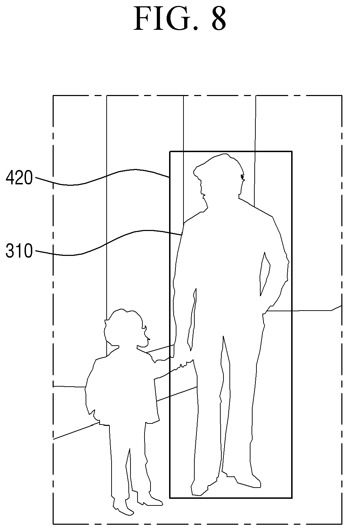

FIG. 5 is a diagram illustrating a depth map of the captured image, FIG. 6 is a diagram illustrating a standard box formed in a portion of a reference map object, FIG. 7 is a diagram illustrating a standard area formed in the standard box, and FIG. 8 is a diagram illustrating a standard box formed in an entirety of the standard map object.

Referring to FIG. 5, the depth map generation unit 150 may generate a depth map 300 for the captured image 200.

The depth map 300 may include relative distance information of an object 310. The relative distance information represents a value in which a relative distance between each point included in the depth map 300 and a capturing point is determined.

In the present disclosure, a resolution of the depth map 300 that may be processed by the map analysis unit 150 may be different from a resolution of the captured image 200. In this case, the depth map generation unit 140 may convert the resolution of the captured image 200 to correspond to a preset resolution of the depth map 300, and may generate the depth map 300 using the converted captured image.

Referring to FIGS. 5 and 6, the distance calculation unit 161 may extract a standard map object 310 corresponding to the standard object, and generate a standard area 410 in the standard map object 310.

The distance calculation unit 161 may calculate an absolute distance of the standard map object 310 by referring to the size of the standard area 410 included in a pre-set portion 311 of the standard map object 310. For example, when the standard object is a person, the distance calculation unit 161 may generate the standard area 410 in a portion (hereinafter, referred to as a target object) 311 of the standard map object 310 corresponding to a head of the person.

The standard area 410 may be provided in the form of a rectangle having the maximum size included in the target object 311. For example, four corners of the standard area 410 may overlap a boundary of the target object 311.

As the standard area 410 is provided in the form of a rectangle, the size of the standard area 410 may be calculated using a horizontal length H1 and a vertical length V1 of the standard area 410. The distance calculation unit 161 may calculate the absolute distance of the standard map object by referring to the size of the standard area 410.

Referring to FIG. 7, the distance calculation unit 161 may calculate a relative distance of the standard map object 310 by extracting some of relative distance information included in the standard area 410.

The distance calculation unit 161 may generate a feature area 411 within the standard area 410. The distance calculation unit 161 may generate the feature area 411 with a preset size. For example, the distance calculation unit 161 may set a horizontal length H2 and a vertical length V2 of the feature area 411 to correspond to 30% of the horizontal length H1 and the vertical length V1 of the standard area 410, respectively.

The distance calculation unit 161 may generate a feature area 411 at the center of the standard area 410. For example, the distance calculation unit 161 may generate the feature area 411 so that the center C of the standard area 410 and the center of the feature area 411 match. Meanwhile, according to some embodiments of the present disclosure, the distance calculation unit 161 may also generate a feature area 411 so that the feature area 411 is disposed at an arbitrary point in the standard area 410.

The distance calculation unit 161 may calculate an average or median value of the relative distance included in the feature area 411 and determine such an average or median value as the relative distance of the standard map object 310. Here, the average value represents a value obtained by dividing the sum of all relative distances included in the feature area 411 by the number of relative distances, and the median value represents a value corresponding to the middle of a distribution of the relative distances included in the feature area 411. Alternatively, the median value may represent a relative distance of a center pixel of the feature area 411. However, in the present disclosure, it is an example that the relative distance of the standard map object 310 is determined as the average or median value of the relative distances included in the feature area 411, and various values representing the corresponding feature area 411 may be determined as the relative distance of the standard map object 310. Hereinafter, it will be mainly described that the relative distance of the standard map object 310 is determined as the average or median value of the feature area 411.

The absolute distance and the relative distance of the standard map object 310 are calculated by the distance calculation unit 161, and the distance conversion unit 162 may convert the relative distance for the entire area of the depth map into an absolute distance based on the calculated absolute and relative distances.

Meanwhile, FIGS. 6 and 7 describe that the standard area 410 is generated in the target object 311, which is a portion of the standard map object 310, but as illustrated in FIG. 8, a standard area 420 may also be generated at an edge of the standard map object 310. In this case, the standard area 420 may be generated with the same size as the bounding box 220 of the standard object, and the distance conversion unit 162 may calculate the absolute distance and the relative distance of the standard map object 310 based on the standard area 420 generated with the same size as the bounding box 220 of the standard object.

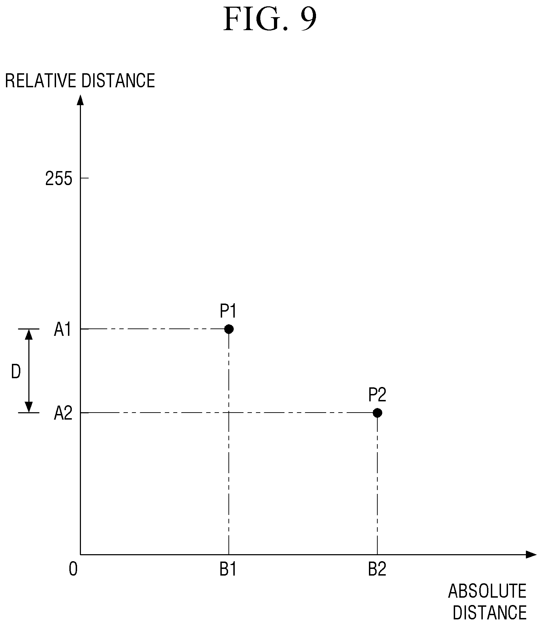

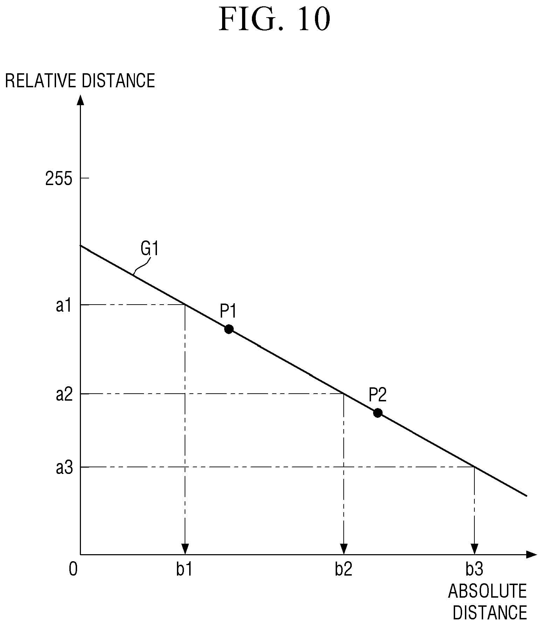

FIG. 9 is a diagram illustrating reference points displayed on a distance coordinate plane and FIG. 10 is a diagram illustrating a reference graph formed based on the reference points.

Referring to FIG. 9, the distance calculation unit 161 may display standard points P1 and P2 on a distance coordinate plane.

The distance coordinate plane may be formed by a horizontal axis representing an absolute distance and a vertical axis representing a relative distance. The standard points P1 and P2 represent coordinate points on the distance coordinate plane corresponding to the standard map object 310.

The distance calculation unit 161 may select a standard object among the reference objects. At least two standard objects may be selected from different reference objects.

In addition, the distance calculation unit 161 may select a standard object so that a relative distance between different standard map objects 310 is formed to be a preset interval or more than the preset interval. FIG. 9 illustrates that a relative distance interval between two standard map objects 310 is D.

When the standard object is selected, the distance calculation unit 161 may calculate the absolute distance of the standard map object 310 by generating a standard area 410 in the standard map object 310 corresponding to the standard object and referring to the size of the standard area 410. In addition, the distance calculation unit 161 may calculate the relative distance of the standard map object 310 by forming a feature area 411 in the standard area 410 and referring to the relative distance included in the feature area 411. In this case, when the interval between the relative distances of different standard map objects 310 is less than a preset interval, the distance calculation unit 161 may select a new standard object and repeat the above-described process based on the new standard object.

When the relative distance and the absolute distance of the standard map object 310 are confirmed, the standard points P1 and P2 corresponding to the standard object may be displayed on the distance coordinate plane. FIG. 9 illustrates two standard points P1 and P2 for two standard objects displayed on the distance coordinate plane. As a relative distance and an absolute distance of a first standard map object are A1 and B1, respectively, a first standard point P1 may be displayed on the distance coordinate plane based on the relative distance and the absolute distance of the first standard map object. Similarly, as a relative distance and an absolute distance of the second standard map object are A2 and B2, respectively, a second reference point P2 may be displayed on the distance coordinate plane based on the relative distance and the absolute distance of the second standard map object.

Referring to FIG. 10, the distance conversion unit 162 may generate a standard graph G1 based on the standard points P1 and P2.

The standard graph G1 may be generated by connecting a plurality of standard points P1 and P2. FIG. 10 illustrates that a standard graph G1, which is a straight line, is generated by connecting two standard points P1 and P2.

The standard graph G1 reflects the ratio of the absolute distance and the relative distance of the standard map object 310, and the distance conversion unit 162 may calculate an absolute distance for another portion of the depth map by using the standard graph G1. Referring to FIG. 10, when the relative distance is a1, the absolute distance of the corresponding point of the depth map may be determined as b1, when the relative distance is a2, the absolute distance of the corresponding point of the depth map may be determined as b2, and when the relative distance is a3, the absolute distance of the corresponding point of the depth map may be determined as b3.

Based on this process, the distance conversion unit 162 may calculate the absolute distances of the entire area 400 of the depth map 300.

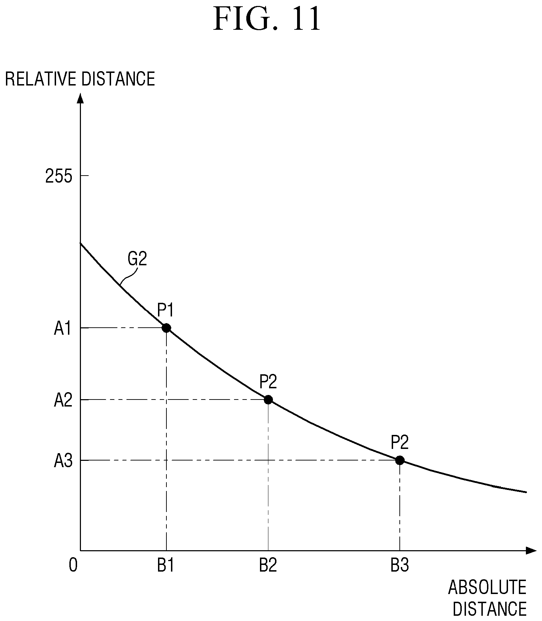

FIG. 11 is a diagram illustrating that a standard graph is formed based on three standard points.

Referring to FIG. 11, the distance calculation unit 161 may select three or more standard objects.

When there are three standard objects, three standard points P1, P2, and P3 may be displayed on the distance coordinate plane, and a standard graph G2 generated based on the three standard points P1, P2, and P3 may be formed as a curved line rather than a straight line.

As a relative distance and an absolute distance of a first standard object are A1 and B1, respectively, a first standard point P1 may be displayed on the distance coordinate plane based on the relative distance and the absolute distance of the first standard object. As a relative distance and an absolute distance of a second standard object are A2 and B2, respectively, a second standard point P2 may be displayed on the distance coordinate plane based on the relative distance and the absolute distance of the second standard object. As a relative distance and an absolute distance of a third standard object are A3 and B3, respectively, a third standard point P3 may be displayed on the distance coordinate plane based on the relative distance and the absolute distance of the third standard object.

As the number of standard objects increases, the standard graph G2 may be generated by reflecting the ratio of relative distances and absolute distances for a larger number of standard map objects corresponding to the standard objects. When the distance conversion is performed using the standard graph G2 generated based on more standard map objects, the reliability of distance conversion may be improved.

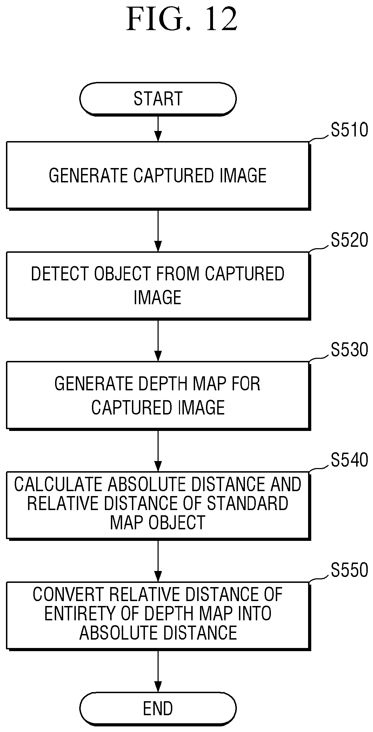

FIG. 12 is a flowchart illustrating a method for image analysis according to an embodiment of the present disclosure.

Referring to FIG. 12, to calculate an absolute distance of a captured image 200 of an imaging unit 110, which is a monocular camera, the imaging unit 110 may first generate the captured image 200 (S510).

An object detection unit 140 may detect an object from the captured image 200. Specifically, the object detection unit 140 may detect a reference object among the objects included in the captured image 200, wherein the reference object is an object for which standard size information has been secured.

A depth map generation unit 150 may generate a depth map for the captured image 200. A distance calculation unit 161 of a map analysis unit 160 may select a standard object among the reference objects detected by the object detection unit 140. In addition, the distance calculation unit 161 may calculate an absolute distance of the standard map object 310 by using the size of the standard map object 310 corresponding to the standard object, and may calculate a relative distance of the standard map object 310 by generating a standard area 410 in the standard map object 310.

The distance conversion unit 162 may convert the relative distance for the entire area of the depth map into the absolute distance according to the ratio of the relative distance and the absolute distance of at least two standard map objects 310.

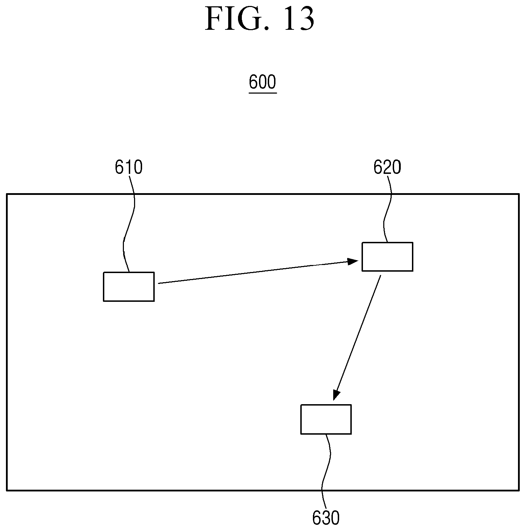

FIG. 13 is a diagram illustrating that a region of interest is switched.

Referring to FIG. 13, the map analysis unit 160 may detect a standard object from a captured image of preset areas of interest 610, 620, and 630 among the capturable areas 600 of the imaging unit 110, and may update the absolute distance generated in advance for the depth map of the corresponding captured image based on the detected standard object.

As described above, the map analysis unit 160 may calculate the absolute distance for the entire area of the depth map based on the standard object detected from the captured image 200. Meanwhile, the standard object selected by the map analysis unit 160 may be an object that does not have a standard shape and size. In such cases, an error may be reflected in the absolute distance generated based on the corresponding standard object.

In order to compensate for the reflection of the error due to the selection of the standard object, the map analysis unit 160 may update the absolute distance for the entire area of the previously generated depth map (hereinafter, referred to as an entire absolute distance).

In order to update the entire absolute distance, the map analysis unit 160 may detect the standard object from a captured image of the preset areas of interest 610, 620, and 630 of the capturable area 600 of the imaging unit 110. Here, the capturable area 600 represents a capturing area of the imaging unit 110 determined by a driving range of the pan tilt equipment included in the imaging unit 110.

The map analysis unit 160 may extract a standard map object from captured images corresponding to the areas of interest 610, 620, and 630 and calculate an absolute distance for the extracted standard map object. In addition, the map analysis unit 160 may update the entire absolute distance by applying the absolute distance calculated for the standard map object to the entire area of the depth map. In this case, when a difference between the newly generated entire absolute distance and the existing entire absolute distance exceeds a preset threshold value, the map analysis unit 160 may update the entire absolute distance. The update of the entire absolute distance may be continuously performed, and the reliability of the entire absolute distance for the captured images corresponding to the areas of interest 610, 620, and 630 may be improved by updating the entire absolute distance in this way.

The capturable area 600 of the imaging unit 110 may include a plurality of areas of interest 610, 620, and 630. As illustrated in FIG. 13, the plurality of areas of interest 610, 620, and 630 may be switched in a preset order. The areas of interest 610, 620, and 630 are areas of the captured image 200 that need to be specifically observed, and the user may pre-set the coordinates, switching times, and switching orders of the plurality of areas of interest 610, 620, and 630. FIG. 13 illustrates that the areas of interest 610, 620, and 630 are switched in the order of a first area of interest 610, a second area of interest 620, and a third area of interest 630.

The map analysis unit 160 may detect a standard object from captured images of the areas of interest 610, 620, and 630 that have been switched in a preset order among the plurality of areas of interest 610, 620, and 630. When a reference object is included in the captured images of the switched areas of interest 610, 620, and 630, the map analysis unit 160 may select the standard object among the reference objects. On the other hand, when the reference object is not included in the captured images of the switched areas of interest 610, 620, and 630, the map analysis unit 160 may omit the updating of the entire absolute distance based on the corresponding areas of interest 610, 620, and 630. Referring to FIG. 13, when the reference object is included in the captured image of the first area of interest 610, the map analysis unit 160 may perform the updating of the entire absolute distance for the captured image. Next, the object detection unit 140 may attempt to detect a reference object from the captured image of the second area of interest 620. As a result, when the reference object is detected from the captured image of the second area of interest 620, the map analysis unit 160 may perform the updating of the entire absolute distance for the captured image. On the other hand, when the reference object is not detected from the captured image of the second area of interest 620, the map analysis unit 160 may omit the updating of the entire absolute distance for the corresponding captured image. Next, the object detection unit 140 may attempt to detect a reference object from the captured image of the third area of interest 630, and such a process may be performed for all areas of interest 610, 620, and 630.

Although the embodiments of the present disclosure have been described with reference to the accompanying drawings, those of ordinary skill in the art to which the present disclosure pertains will understand that the present disclosure may be embodied in other specific forms. Therefore, it should be understood that the embodiments described above are illustrative in all aspects and not restrictive.

## Claims

1. An apparatus for image analysis, the apparatus comprising:
an imaging unit generating a captured image;
an object detection unit detecting an object from the captured image;
a depth map generation unit generating a depth map for the captured image; and
a map analysis unit calculating an absolute distance for an entire area of the depth map by selecting a standard object among the detected objects and referring to an absolute distance calculated for a standard map object corresponding to the standard object among map objects included in the depth map.

2. The apparatus of claim 1, wherein the depth map includes relative distance information of objects included in the captured image.

3. The apparatus of claim 1, wherein the object detection unit detects a reference object for which standard size information is secured among the objects included in the captured image, and
the map analysis unit selects the standard object among the reference objects.

4. The apparatus of claim 1, wherein the map analysis unit includes:
a distance calculation unit calculating an absolute distance of the standard map object by referring to the size of the standard map object; and
a distance conversion unit converting a relative distance for the entire area of the depth map into an absolute distance according to a ratio of the relative distance and the absolute distance of at least two standard map objects.

5. The apparatus of claim 4, wherein the distance calculation unit calculates the absolute distance of the standard map object by referring to the size of a standard area included in a preset portion of the standard map object.

6. The apparatus of claim 5, wherein the distance calculation unit calculates a relative distance of the standard map object by extracting some of the relative distance information included in the standard area.

7. The apparatus of claim 6, wherein the distance calculation unit is configured to:
generate a feature area of a preset size in the standard area, and
determine an average or median value of relative distances included in the feature area as the relative distance of the standard map object.

8. The apparatus of claim 1, wherein the map analysis unit is configured to:
detect a standard object from a captured image for a pre-set area of interest of a capturable area of the imaging unit, and
update an absolute distance generated in advance for the depth map of the captured image based on the detected standard object.

9. The apparatus of claim 8, wherein the capturable area includes a plurality of areas of interest, and
the map analysis unit detects a standard object from a captured image for an area of interest that has been switched in a preset order among the plurality of areas of interest.

10. The apparatus of claim 1, wherein the object detection unit detects an object in real time from the captured image, and
the map analysis unit calculates the absolute distance for the entire area of the depth map when the object is detected from the captured image according to the real-time detection result.

11. A method for image analysis, the method comprising:
generating a captured image;
detecting an object from the captured image;
generating a depth map for the captured image;
selecting a standard object among the detected objects; and
calculating an absolute distance for an entire area of the depth map by referring to an absolute distance calculated for a standard map object corresponding to the standard object among map objects included in the depth map.

12. The method of claim 11, wherein the depth map includes relative distance information of objects included in the captured image.

13. The method of claim 11, wherein the detecting of the object includes detecting a reference object for which standard size information is secured among the objects included in the captured image, and
the selecting of the standard object includes selecting the standard object among the reference objects.

14. The method of claim 11, wherein the calculating of the absolute distance for the entire area of the depth map includes:
calculating an absolute distance of the standard map object by referring to the size of the standard map object; and
converting a relative distance for the entire area of the depth map into an absolute distance according to a ratio of the relative distance and the absolute distance of at least two standard map objects.

15. The method of claim 14, wherein the calculating of the absolute distance of the standard map object includes calculating the absolute distance of the standard map object by referring to the size of a standard area included in a preset portion of the standard map object.

16. The method of claim 15, further comprising calculating a relative distance of the standard map object by extracting some of the relative distance information included in the standard area.

17. The method of claim 16, wherein the calculating of the relative distance of the standard map object includes:
generating a feature area of a preset size in the standard area; and
determining an average or median value of relative distances included in the feature area as the relative distance of the standard map object.

18. The method of claim 11, further comprising:
detecting a standard object from a captured image for a pre-set area of interest of a capturable area of the imaging unit that generates the captured image; and
updating an absolute distance generated in advance for the depth map of the captured image based on the detected standard object.

19. The method of claim 18, wherein the captured image includes a plurality of areas of interest, and
the detecting of the standard object from the area of interest includes detecting a standard object from a captured image for an area of interest that has been switched in a preset order among the plurality of areas of interest.

20. The method of claim 18, wherein the detecting of the object from the captured image includes detecting an object in real time from the captured image, and
the calculating of the absolute distance for the entire area of the depth map includes calculating the absolute distance for the entire area of the depth map when the object is detected from the captured image according to the real-time detection result.
